# EUROPEAN PATENT SPECIFICATION

(11) **EP 1 510 236 B1**
(45) Date of publication and mention of the grant of the patent: **04.06.2008**
(21) Application number: 02804369.3
(22) Date of filing: 03.12.2002
(51) Int. Cl.: A63B 69/18, A63B 69/00, A63B 24/00

(54) **METHOD FOR TRAINING MOUNTAIN SKIERS AND SNOWBOARDERS (VARIANTS) AND A DEVICE FOR CARRYING OUT SAID METHOD**
TRAININGSVERFAHREN FÜR ABFAHRTSSKILÄUFER UND SNOWBOARDERS (VARIANTEN) UND VORRICHTUNG ZUR DURCHFÜHRUNG DIESES VERFAHRENS
PROCEDE D'ENTRAINEMENT DE SKIEURS ALPINS ET DE SURFEURS (VARIANTES) ET DISPOSITIF DE MISE EN OEUVRE DE CE PROCEDE

(30) Priority: 05.12.2001 RU 2001132657
(43) Date of publication of application: 02.03.2005
(73) Proprietor: Manuilov, Mikhail Valentinovich, Moscow, 123362 (RU)
(72) Inventor: Manuilov, Mikhail Valentinovich, Moscow, 123362 (RU)
(74) Representative: Bucher, Ralf Christian
(86) International application number: PCT/RU2002/000516
(87) International publication number: WO 2003/047704

(56) References cited:
- EP-A2- 0 792 667
- DE-A1- 4 002 223
- DE-A1- 19 521 619
- JP-A- 2000 157 656
- US-A- 3 791 645
- US-A- 4 906 192
- US-A- 5 713 794
- US-A- 5 895 340
- PATENT ABSTRACTS OF JAPAN vol. 2000, no. 09, 13 October 2000 (2000-10-13) & JP 2000 157656 A (KATSUMI HIROSHI), 13 June 2000 (2000-06-13)

## Description

### FIELD OF THE INVENTION

The present invention relates generally to sports and more particularly to apparatuses and methods for indoor training of alpine skiers and snowboarders.

A possibility to produce loads having a nature that is specific for these kinds of sports under the conditions of town, to perfect skiing technique elements in the absence of a snow cover sufficient for skiing, as well as at periods between seasons makes it possible to improve the training process efficiency greatly.

### BACKGROUND OF THE INVENTION

There have been known various methods for indoor training of alpine skiers and snowboarders and also apparatuses to carry out such training methods.

For instance, a method for training alpine skiers carried out by an apparatus described in the United States Patent 3, 462, 141, CI. 272-97, dated 1969, consists in that, in simulating the execution of turns, a skier moves his/her skis towards the right/left by using a cable tightened perpendicular to the ski length. A sportsman keeps his/her equilibrium position by means of ski poles, which are resting upon a premises floor. With such training method, skier's leg movements are simulated to a certain extent, but a nature of training loads differs markedly from that during actual skiing, since forces acting on the torso of a sportsman are entirely absent (as it is in the action of centrifugal forces during actual execution of turns). By virtue of this, the training efficiency in accordance with the above-described method using such an apparatus is low.

There has also been known a method for training alpine skiers that is used when training with an apparatus described in the USSR Author's Certificate 874,082, Int. CI. A63B 69/00, dated 1981. In accordance with this method a sportsman standing on a ski imitator mounted on a platform that is secured on a rotating beam, is deflected inwardly toward the turn, while exhibiting resistance to centrifugal forces arising from the platform rotation. With such training method and considerable rotational speeds of the platform, a nature of the load acting on the sportsman is near the actual nature in its force. With such training method, however, there is no linkage between the value of the centrifugal force acting on the sportsman and actions of the sportsman itself.

There has also been known a method for training alpine skiers that is used when employing an apparatus described in the USSR Author's Certificate 1,493,272, Int. CI. A63B 69/00, dated 1989. When training in accordance with this method, a sportsman who has put on a safety belt before the training, step on a ski imitator mounted on a pivoted platform, draws aside the skis together with the pivoted platform using his/her muscular force. A sportsman force is counteracted by a stretchable spring connected to the pivoted platform, whereas a safety belt connected by means of a cable to a base of the apparatus enables the sportsman to maintain the torso in inclined position.

With such training method, the origin of centrifugal forces when executing the turns is simulated to a certain extent, but the value of these forces is not directly related to the value of the ski canting angle, as it is during actual skiing on the slopes. Change in the position of skis by changing their canting angle with respect to a platform surface has no influence on the value of force acting on a sportsman, whereas during actual skiing as well as during snowboarding, a centrifugal force value is directly dependent on a canting angle.

When training in accordance with the above-described method, because of the absence of a linkage between a canting of the ski imitators and forces acting on the sportsman, a nature of the force action on the sportsman fails to reproduce actual situation, which greatly reduces the training efficiency.

The Patent Abstract of Japan vol. 2000, no. 09, 13 October 2000 (2000-10-13) & JP 2000 157656 A (Katsumi Hiroshi), 13 June 2000 (2000-06-13) describes a practice equipment, which contains a base with two supports, springs mounted at upper parts of the supports, a waist band engaged with the springs. Imitation of the turns is carried out by applying a force to a sportsman torso due to stretching of the spring when a sportsman moves his or her body to the right or to the left side relatively his or her feet.

While in this system the canting angle is not detecting and the system does not have any means for its detection, the force applied to the sportsman torso does not depend on canting angle and, consequently, does not correspond to the centrifugal force during actual skiing.

The United States Patent 3,791,645, dated February 12, 1974 (Nick L. Stelma) describes a ski-simulator training apparatus including a track supporting a carriage for to and fro powered motion resultant from frictional contact with one or the other of oppositely moving flights of a power driven belt. This contact occurs when turning or canting a pair of foot pads supported on the carriage.

This apparatus creates to and fro movement of skier's feet relatively his or her body, but the character of this movement differs significantly from the movement during actual skiing on the slope.

During actual skiing at the moment of changing direction of canting, sportsman's feet does not change the direction of their movement relatively his or her body, they continue their movement in the previous direction, then this movement smoothly slows down, stops and, only after that, changes its direction.

At the same time, in the apparatus mentioned above, during the movement of a carriage along a track, at the moment of changing direction of turning or canting of the foot pads, the carriage instantly changes the direction of its movement, because at this moment the carriage contacts with the opposite moving flight of the power driven belt. Thus, such a character of movement does not correspond to actual skiing, including the fact that at the moment of changing direction of turning or canting there is a jerk of a carriage.

The United States Patent 5,895,340, dated April 20, 1999 (Martin Keller) describes a training device, which contains a drive system which moves a carriage with an elongated support member along a guide path. Also this system contains a sensor for detecting inclination of said support member. As a drive system a cable and pulley system, a reversible electric motor, a hydraulic motor can be used.

While in this device only the fact of inclination to one or another edge is detected and at the moment of changing direction of inclination the carriage instantly changes the direction of its movement, the movement of the carriage is exactly the same as the movement of the carriage in the apparatus described in the previously discussed patent (US Patent 3,791,645) and also does not correspond to actual skiing.

The closest prior art has been disclosed in a method for training alpine skiers that is used when employing an apparatus described in the application DE 19521619 A1, dated December 12, 1996. In this known apparatus a simulation of the ski turns is carried out by applying a force to a ski imitator, said force being perpendicular directed with respect to a ski length towards the center of a turn to be simulated. In so doing the ski imitator has a possibility to vary a canting angle and is mounted on a movable base to move into a position that is perpendicular to the ski length. The value of a force applied to the ski imitator in the known apparatus is determined by the sum of two factors: first, the value of displacing the movable platform with respect to a central (neutral) position; second, the speed of varying a ski imitator canting angle.

The main drawback with such an approach used in the known apparatus consists in that a canting angle value has no influence on the value of a force applied to the ski imitator, with a relatively slow variation of the canting angle (simulation of medium and long arcs of a turn). For such arcs, the value of a force applied is only determined by a transverse displacement of the movable platform. In the known apparatus, only drastic changes in the canting angle result in variations of a force applied to the ski imitator.

An approach accepted in the known engineering solution enables the simulation of ski turns to a certain extent, but a nature of the developed loads differs markedly from that during actual skiing.

During actual skiing any deviation by a sportsman of his/her crura (knees) inwardly toward the turn, irrespective of the speed of this deviation (smooth or sharp), brings about a considerable growth of the centrifugal force and a corresponding increase in the load on the sportsman. A centrifugal force growth when increasing a canting angle of skis (snowboard) is accounted for by the fact that with a greater canting, the skis (snowboard) begin to move through an arc that is smaller in diameter. When maintaining a sportsman linear velocity, this results in a centrifugal force growth (see, for example, Tsenin Y. K. "Alpine Skis Without an instructor", M., 000 "Eastern Horizon", pp. 69, 74).

In the known engineering solution, however, when the sportsman varies a ski canting angle smoothly, the applied force is not changed, which is one or the main reasons why a nature of loads differs from that of actual skiing:

### SUMMARY OF THE INVENTION

Accordingly, it is a technical effect of the present invention to improve the training efficiency by producing loads, which are more close in dynamic characteristics and correspondence with the sportsman actions to those revealed during actual skiing, and hence the simulation of the training conditions, which are more close to actual conditions.

It is an additional technical effect of the present invention to provide a possibility of simulating different characteristics of skis (snowboard), different conditions of a slope and other training parameters by varying a type of functional relationships between the value of the applied forces and canting angles.

The above technical effect as to a method according to the first embodiment of the present invention is attained by a method for training alpine skiers and snowboarders as described in claim 1.

The above technical effect as to a method according to the second embodiment of the present invention is attained by a method for training alpine skiers and snowboarders as described in claim 2.

The feature consisting in that when the sportsman moves during training, a force applied to the sportsman torso is directed horizontally may supplement the latter proposed embodiment of the training method.

The proposed embodiments of the training method may also be supplemented by the feature consisting in that information on a canting value of ski or snowboard imitator and/or on a training process is displayed in a video graphic presentation and/or in an audio format.

The above technical effect as to an apparatus is attained by an apparatus for training alpine skiers and snowboarders as described in claim 5.

The apparatus may be additionally provided with a power belt to be put on by the sportsman, two upright guides mounted on the base to the left and the right of the ski or snowboard imitator and two movable couplings mounted on the guides to freely move in an upright direction and connected to the power belt by means of cables.

The means for detecting a canting angle of the ski or snowboard imitator may be connected to a computer provided with a means for displaying a video graphic information, for example, a video monitor, and/or a means for an audio data reproduction.

### BRIEF DESCRIPTION OF THE DRAWINGS

The present invention is explained by the accompanying drawings, in which:
FIGURES 1 and 2 illustrate a diagram of an apparatus to carry out the proposed method in an embodiment adapted to train alpine skiers;
FIGURE 3 illustrates a diagram of an apparatus in an embodiment adapted to train snowboarders;
FIGURE 4 illustrates a type of standard relationships between the value of the produced force and a canting angle of a ski (snowboard) imitator.

### DESCRIPTION OF THE PREFERRED EMBODIMENTS

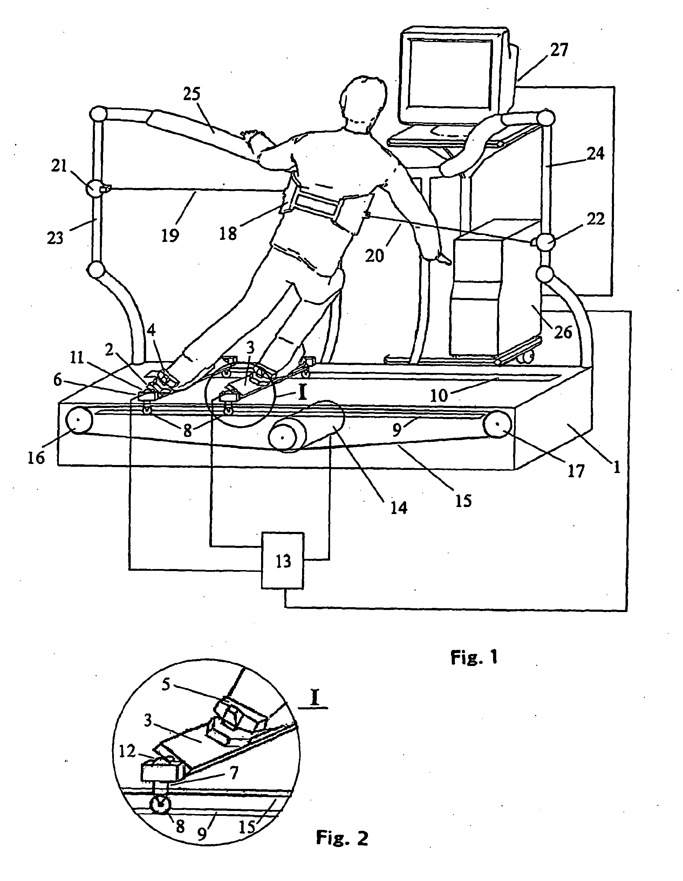

Referring now to drawings and more particularly to FIGURE 1 there is illustrated an apparatus to carry out the proposed embodiments of a method for training alpine skiers. The apparatus comprises a base 1, on which there are located imitators of a left ski 2 and a right ski 3 provided with the sportsman footwear bindings 4, 5. The ski imitators 2, 3 are mounted to move along the base 1 in the direction perpendicular with respect to their longitudinal axis. Moreover, the ski imitators 2, 3 may also be canting (inclined) by a sportsman. The possibility to move the ski imitators 2, 3 along the base 1 is ensured, for example, by mounting thereof on trucks 6 and 7, which are provided with wheels 8 with their axes being parallel to the longitudinal axis of skis. The wheels 8 move on guides 9 and 10 mounted along the base 1. The trucks 6 and 7 may also be mounted on the guides using sliding bearings. The possibility to be canting, that is to be inclined towards the ski imitators 2, 3, may be ensured, for example, by the fact that each ski imitator is connected to the truck through an axis passing along the ski. The skis may be mounted using a hinge joint, for example, as described in the USSR Author's Certificate 874,082, when the ski imitators are made in the form of a box-like casing and a hinge joint with trucks are made in the form of a biaxial loop-shaped joint.

In order to ensure the most complete simulation of features of a modern skiing technique, feet of a alpine skier must have the possibility to freely move along the longitudinal axis of skis, thereby providing a possibility of the so-called "disfooting", that is the advancing the inner (with respect to the center of a turn to be simulated) ski in relation to the outer ski. Such possibility may be ensured, for example, by the fact that each of the bindings 4, 5 is mounted on the ski imitators 2, 3 on a movable base, which freely moves along the ski imitator by means of sliding bearings or wheels.

The trucks 6, 7 on which imitator of a left ski 2 and a right ski 3 are mounted must be interconnected, in order to ensure a specific width of a skier stand. Such a connection may be flexible, for example, in the form of a cable, or rigid, for example, in the form of a plate having a specific length that is connected to the trucks. In the apparatus in accordance with the present invention provision may be made for adjusting the distance between the ski imitators 2, 3 by varying the length of the connecting cable or by replacing the plate or adjusting its length.

The apparatus in accordance with the present invention is provided with a means for detecting a canting angle of the ski imitators comprising a canting angle detector 11 of a left ski imitator and a canting angle detector 12 of a right ski imitators (an enlarged view is shown in FIGURE 2) which are mounted on the trucks 6, 7 and have an electric output. It is also possible to mount the canting angle detectors 11, 12 on the ski imitators 2, 3. These detectors may be used in the form of canting angle meters (rotation angle encoders) of electromechanical, photoelectric and other types.

The apparatus in accordance with the present invention also comprises a control unit 13 connected with its input to the canting angle detectors 11, 12 and a power drive 14 connected to the output of the control unit. The power drive may be used in the form of an electric motor (as shown in FIGURE 1), a hydraulic actuator or power drives of other types, which have a possibility to be controlled externally with the value of the produced force, such as for example, a pneumatic drive.

The power drive 14, by means of a cable 15 through rollers 16, 17 fixed on the edges of the base 1, is connected to the trucks 6, 7 on which the ski imitators 2, 3 are mounted.

When training using the proposed apparatus, there may also be employed a belt 18 to be put on by a sportsman and connected through cables 19, 20 to movable couplings 21, 22. The couplings 21, 22 are located on upright guides 23, 24 mounted on the base 1 from the left and the right sides. The couplings 21, 22 are mounted on the guides to freely move along thereof. Such a possibility may be ensured by mounting the couplings 21, 22 on the guides by means of sliding or rolling-contact bearings.

The apparatus as depicted in FIGURE 1 is also provided with a handrail 25 for the sportsman hands.

In the proposed apparatus use is also may be made of a computer to which information comes from the canting angle detectors 11, 12. (In FIGURE 1 there is depicted a system block 26 of the computer). The computer may be provided with a means for displaying a video graphic information on values of canting angles of the ski (snowboard) imitators, for example, with a video monitor (reference number 27 in FIGURE 1).

In addition to a video monitor for displaying information, use is also may be made of a video projector provided with a screen, as well as other means.

Information on canting angles of the ski (snowboard) imitators and other information on the training process may also come to the sportsman in audio format, for example, through a loudspeaker (not shown in FIGURE 1).

To implement the above-enumerated possibilities, which are reveled when using a computer, the latter must be provided with corresponding software.

The control unit 13 may be made in the form of an electronic module comprising input amplifiers of signals from the canting angle detectors 11, 12, a device for forming the law of varying the value of the produced force depending on the canting angle and an output power amplifier connected to the input of the power drive 14. The device for forming the law of varying the value of the produced force depending on the canting angle may also be connected to a computer (by means of analogue-to-digital and digital-to-analogue converters). In this case a wide range of selecting different types of relationship between the value of a force and canting angles may be ensured, thereby simulating a wide variety of types of skis (snowboards) and characteristics of a slope.

Let us consider a composition of an apparatus to carry out the proposed embodiments of a method adapted to train snowboarders.

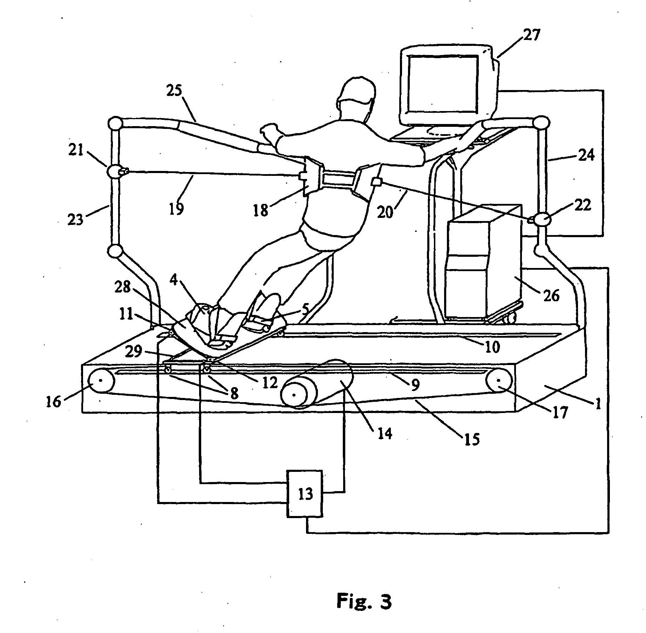

Referring now to FIGURE 3, there is depicted a possible implementation of such apparatus. The apparatus comprises the same main parts as a "alpine-skiing" embodiment: a base 1, guides 9, 10, canting angle detectors 11, 12, a control unit 13, a power drive 14, a cable 15, rollers 16, 17. It is also may be provided with a power belt 18 connected to movable couplings 21, 22 and a computer connected with a video monitor. Instead of ski imitators use is made of a snowboard imitator 28, also mounted to move along the base 1 and to be canting (inclined) by a sportsman, as shown in FIGURE 3.

In the same manner as for ski imitators, the possibility to move the snowboard imitator 28 along the base 1 is ensured, for example, by mounting thereof on a movable truck 29 provided with wheels 8 with their axes being parallel to the longitudinal axis of the snowboard. The possibility for the snowboard imitator 28 to be canting may be ensured, for example, by its hinge joint with the truck. In so doing, in the same manner as for ski imitators, a hinge joint may comprise one or two hinge axes, the direction of these axes being parallel to the direction of the longitudinal axis of the snowboard imitator. When a hinge joint having one hinge axis is used for a snowboard canting, the position of this axis may coincide with the longitudinal axis of the snowboard symmetry. When a hinge joint having two hinge axes is used for a snowboard canting, they may pass along edges of the snowboard (as depicted in FIGURE 3).

The snowboard imitator 28 is also provided with a means for detecting its canting angle with respect to the base 1. This means is made in the form of two canting angle detectors 11, 12 mounted on the snowboard imitator 28 in the vicinity of its edges. It should be pointed out that the canting angle detectors 11, 12 may also be mounted on a truck 29. When using the canting angle detectors 11, 12, which make possible remote measuring of a canting angle, for example, optical IR-detectors, they may be mounted on the edges of the base 1. It should also be pointed out that when the snowboard imitator is mounted by means of a hinge mechanism having one hinge axis, the means for detecting a canting angle may have only one detector for measuring this angle. Such embodiment of mounting the snowboard imitator, however, compares unfavorably to a certain extent in relation to actual snowboarding, as regards a nature of the load on the sportsman feet.

The snowboard imitator 28 is also provided with the sportsman footwear bindings 4, 5 whereby the position of the sportsman feet is fixed in relation to the snowboard imitator 28.

Let us consider how the claimed method for training alpine skiers and snowboarders (the embodiments thereof) is carried out when using a training apparatus.

Training in accordance with the first claimed embodiment proceeds as follows.

When training skiers, a sportsman stands on ski imitators 2, 3 and fixes his/her footwear by means of bindings 4, 5 (FIGURES 1, 2).

When simulating exercise of turns, a sportsman tilts (inclines) the ski imitators 2, 3 to one or another side. In so doing detectors 11, 12 generate signals which correspond to variations in a canting angle value. These signals enter the input of a control unit 13.

The control unit 13, in response to signals from the detectors 11, 12, generates a signal for controlling a power drive 14, thus resulting in a force developed by the drive 14, said force via a cable 15, rollers 16, 17 and trucks 6, 7 transferring to the ski imitators 2, 3. A direction of the force applied to the ski imitators 2, 3 depends on the direction in which the skis are tilted. So, if a sportsman, in canting, inclines his/her crura to the right, as shown in FIGURE 1 (the center of an arc of a turn to be simulated is situated to its right), a force transferred to the ski imitators 2, 3 from the drive 14 is also directed to the right. When changing a canting direction oppositely, a force applied to the ski imitators 2, 3 changes its direction accordingly.

In such a manner canting of the ski imitators by the sportsman causes the emergence of a force applied to the ski imitators 2, 3 and directed towards the center of a turn to be simulated, in just the same way as it is during actual skiing.

For the purposes of keeping his/her equilibrium position, a sportsman, as during actual skiing, deflects a torso in the direction towards the center of a turn. The ski imitators, as shown in FIGURE 1, are shifted in the opposite direction, whereas the center of mass of a sportsman body is shifted in the direction towards the center of a turn to be simulated with respect to the ski imitators. The pressure on the skis generated by the sportsman is greater, as a rule, on the outer (with respect to a turn center) ski.

Steepness of a turn to be simulated, which is determined by a maximum value of the ski imitators canting, and a turn duration are determined by subsequent actions of the sportsman.

To complete a turn to be simulated and to transfer to a new turn (whose center is situated on opposite side), the sportsman additionally increases an angle of the ski canting or redistributes feet pressure, while applying a primary pressure to the inner (with respect to a turn center) ski. Such actions of the sportsman, as during actual skiing, result in the disruption of balance of forces occurring during the turn and further result in the opposing relative displacement of the center of mass of a sportsman body and the ski imitators. After the center of mass passed above the skis, the sportsman tilts them in the opposite side, thereby starting the exercise of a new turn to be simulated.

The main difference of the second claimed embodiment of the training method consists in applying a force generated when canting the ski (snowboard) imitators, towards a sportsman torso. This may be carried out, for example, by the fact that the sportsman, when simulating the passage of a turn arc, holds on to a handrail 25 with his/her hands. In this case an applied force is transferred to a sportsman torso from the base 1 via his/her hands.

Another possibility consists in the application of a force to a sportsman torso by means of a belt 18. A force acting in this case on a sportsman torso is transferred to him/her from the base 1 via cables 19, 20, couplings 21, 22 and the belt 18.

When carrying out the second claimed embodiment of the training method, a developed force may also be transferred from a power belt directly to a sportsman torso, for example, by means of cables and a power belt or by means of rigid links or otherwise. In so doing the ski (snowboard) imitators may remain immobile in transverse direction, but must have a possibility to be canting by the sportsman as before and must be provided with a means for detecting a canting angle.

Hence, when carrying out the proposed embodiments of the training method, at least three variants of applying a force are possible.

First variant: a force is transferred from a drive to the ski (snowboard) imitators, whereas a sportsman torso is only subjected to inertial forces emerging in lateral movements of the sportsman.

Second variant: a force is transferred from a drive to the ski (snowboard) imitators, whereas a sportsman torso is subjected to a force through a kinematic system comprising, for example, a power belt put on by the sportsman and connected to a base by means of cables.

Third variant: a force is transferred from a drive directly to a sportsman torso, whereas the ski imitators are subjected to a force emerging as a support reaction in response to the rise of pressure on the ski imitators on the part of the sportsman.

While in carrying out the claimed training method by means of a kinematic system, a force is applied to a sportsman torso; the conservation of horizontal direction of this force by a sportsman during his/her movements in the training process is most suited for actual skiing. This force is an agreement with a circumstance that during actual skiing the direction of the centrifugal force acting on the sportsman is in parallel with a slope surface. The maintenance of a horizontal direction of a force applied to a sportsman torso in the execution of the claimed method eliminates the possibility to considerably decrease a load acting on the sportsman feet, said decrease may arise if a force applied to a sportsman torso has an upright component. (In this case pressure exerted by the sportsman to his/her feet is lowered).

When carrying out the claimed training method with the described apparatus, the maintenance of horizontal direction of a force applied to a sportsman torso may be achieved using a belt 18 (its connection with other elements of the apparatus is described above). The use of couplings 21, 22 movable freely in an upright direction allows in any movements of the sportsman the absence of an upright force component to be transferred to a sportsman torso via cables 19, 20. As a result, a force applied to a sportsman torso during training is directed horizontally.

The law of varying a force developed by a drive 14 in relation to a canting angle of the ski imitators 2, 3 (that is a canting angle of the snowboard 28) is defined by assigning a certain transfer characteristic of a control unit 13 (with due regard for characteristics of canting angle detectors 11, 12 and a drive 14). A type of this relationship is selected to be in conformity with a relationship between the centrifugal force acting on the sportsman during actual skiing and a canting angle of the skis (snowboard).

In the actual exercising of turns using alpine skis and snowboard, the value of the centrifugal force acting on a sportsman depends on the radius of an arc in which the sportsman moves while exercising a turn and on a linear velocity of the sportsman. The magnitude of an arc radius is directly dependent on a canting angle of the skis (snowboard), namely: an increase in a canting angle with respect to a slope surface results in a greater deflection of the skis (snowboard) and a corresponding decrease in the arc radius. In this case the magnitude of the centrifugal force increases. A decrease in a canting angle of the skis (snowboard) results in an increase in the arc radius and, accordingly, a decrease in the centrifugal force.

Hence the magnitude of the centrifugal force acting on a sportsman and a canting angle of the skis (snowboard) during actual skiing bear a direct relationship. A specific type of this relationship is determined by different factors, including a speed of motion of the sportsman on the route, the sportsman weight as well as the condition of the snow cover, a type and characteristics of the skis (snowboard). The most important characteristics of the skis (snowboard), which define the behavior of the above-mentioned relationship, consist in their "geometry", primarily the length of the skis (snowboard) and the value of a radius of side cutouts, and also their flexibility.

In the proposed apparatus, the use of an electronic control unit 13 enables one to realize a wide choice of specific types of the law of varying a force acting on a sportsman depending on a canting angle of the ski (snowboard) imitators. Various types of such relationship may be in conformity with different weight of sportsmen, different speed of motion in a turn to be simulated, different types of skis (snowboard). In so doing, despite a considerable variety of types of the above-mentioned relationship, this relationship always has a direct nature, that is it allows the increase in the acting force when increasing the canting of the skis (snowboard) with respect to a central position.

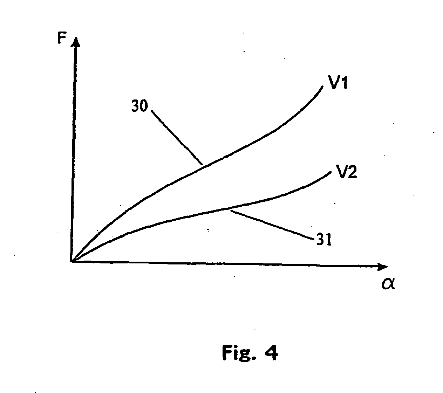

A standard type of the relationship between a centrifugal force F acting on a sportsman and a canting angle α of skis (snowboard) is depicted in FIGURE 4 for two values of a sportsman speed V1, V2. A curve 30 corresponds to a greater speed of motion than a curve 31.

As a type of relationship between a force exerted and a canting angle of the ski (snowboard) imitators when training in accordance with the proposed method, use was made of, for example, tangential relationship, that is the magnitude of a force was selected in proportion to a canting angle tangent. In so doing, the proportionality factor value was established depending on a sportsman weight: with a greater weight, a proportionally greater factor was established. The application of tangential relationship revealed a good correspondence between a nature of the force action on a sportsman and conditions of actual skiing and snowboarding and enabled a good training effect.

In the training practice, other types of relationship between a force exerted and a canting angle of the ski (snowboard) imitators, including those not described by simple functions. Such types of relationship may be selected experimentally for more precise simulation of different training conditions, for example, different conditions of snow cover. The application of an electronic control unit 13 enables one to realize any type of such relationship. The most convenient embodiment of the control unit 13 consists in its connection to a computer.

When operating the proposed apparatus, a computer may be used both for displaying the current information on the training process and for controlling operation of the apparatus as a whole, including for assigning the training modes and controlling the operation of main elements of the apparatus.

It is convenient for a trainee to see information on a canting angle of the ski (snowboard) imitators displayed on a video monitor screen, for example, in the form of a skier (snowboarder) figure inclining inwardly toward a turn to be simulated and "canting" the skis (snowboard) synchronously with the canting of the ski (snowboard) imitators of a training sportsman.

A video monitor may also be used for displaying information on a force acting on the sportsman, energy expendable in the training process and other training parameters. Moreover, a video monitor may be used to display sports routes to be simulated, as well as the so-called "virtual instructor" who trains and "invites" a sportsman to perfect individual elements of the skiing technique.

The use in the training process of a sound accompaniment, for example, simulation of a sound emerging when the ski (snowboard) edges "cut" ice or a rammed snow, intensifies the emotional effect on a trainee, thus improving the training efficiency. Furthermore, the current information on the training process may also be presented employing the sound accompaniment.

Training of snowboarders when carrying out the claimed embodiments of the method takes place in a manner like training of skiers.

In the training in accordance with the first claimed embodiment of the method, a sportsman stands on a snowboard imitator 28 (FIGURE 3) and fixes his/her footwear by means of bindings 4, 5. When simulating the exercise of turns, a sportsman tilts the snowboard imitator 28. In so doing canting angle detectors 11, 12 generate signals whose magnitude is proportional to the value of this angle. According to the magnitude of signals from the detectors 11, 12, a control unit 13 generates a signal for controlling a power drive 14. A force developed by the drive 14, via a cable 15, rollers 16, 17 and a truck 29, is transferred to the snowboard imitator 28.

Like a skier, a snowboarder inclines his/her torso towards the center of a turn to be simulated and, in subsequent travel, may "recanting" the snowboard imitator and transfer to a new turn.

When carrying out the second claimed embodiment of the training method, a snowboarder, like a skier has a possibility to "hover" in a turn arc for a certain time at the expense of applying the developed force to a sportsman torso. This may be ensured by holding on to a handrail 25 or using a belt and a system of cables, in a manner like it was considered for the training of skiers.

A particular difference between the training of snowboarders from that of skiers consists in the fact that, in order to complete a turn and transfer to a new turn to be simulated, a snowboarder can not make use of redistribution of a pressure of the outer and inner (with respect to the center of a turn) feet. To come out from a turn to be simulated, a snowboarder increases a snowboard canting angle, a force applied to a snowboard imitator 28 grows additionally, and a sportsman has a chance of "recanting" the snowboard imitator and entering into a new turn to be simulated.

Certain differences in the implementation of the training process (its variants) exist for skiers and snowboarders as regards the algorithm for operating a control unit 13.

When training snowboarders, a canting angle of a snowboard imitator is uniquely determined by detectors 11, 12, and the control unit 13 uniquely generates a signal for controlling a power drive 14.

In the case of skis, a situation is possible when ski imitators 2, 3 are tilted at different angles. Such a situation requires refinement in the algorithm for operating the control unit 13. The most feasible for practice is to assign the magnitude of a developed force in accordance with the value of a canting angle of the outer (with respect to the center of a turn to be simulated) ski since, as noted above, a skier exercises the main part of a turn while maintaining a primary pressure applied to the outer ski. In a situation when a trainee tilts the ski imitators in the opposite direction (this corresponds to the so-called "plow" skiing), the most justified is to establish the relationship between the magnitude of a force and canting angular difference of the ski imitators.

When training in accordance with the claimed method, a technical effect consisting in the improvement of the training efficiency, is primarily attained at the expense of the fact that in the course of training the magnitude of forces acting on a sportsman is in a faithful compliance with the value of a canting angle of the ski (snowboard) imitators and bears the same relationship to this angle, as during actual skiing. Owing to this fact, force loads acting on a sportsman more closely simulate the conditions of actual skiing as regards their dynamic nature and mainly their correspondence with the sportsman actions.

It should be noted that the claimed training method (embodiments) and apparatus to carry out the method may be used not only for training the sportsmen but also as a basis for an enthralling attraction.

## Claims

1. A method for training alpine skiers and snowboarders with a ski or snowboard imitator (2, 3, 28), in which
- when canting the ski or snowboard imitator (2, 3, 28) to one or another side, simulation of executing turns is carried out by applying a force to the ski or snowboard imitator (2, 3, 28),
- said force is perpendicular directed with respect to the longitudinal axis thereof towards the center of a turn to be simulated,
- the value of a canting angle of the ski or snowboard imitator (2, 3, 28) is measured,
**characterized in that**
- the value of the applied force depends directly on the value of the measured canting angle of the ski or snowboard imitator (2, 3, 28),
- the law of varying the applied force is selected in conformity with the law of varying the centrifugal force acting on a sportsman, said centrifugal force depending on a canting angle of the ski or snowboard, during actual skiing.

2. A method for training alpine skiers and snowboarders with a ski or snowboard imitator (2, 3, 28), in which
- when canting the ski or snowboard imitator (2, 3, 28) to one or another side, simulation of executing turns is carried out given appropriate inclinations of a sportsman standing on said ski or snowboard imitator, inwardly toward a turn to be simulated,
- an angle of canting the ski or snowboard imitator (2, 3, 28) is measured,
**characterized in that**
- the simulation of executing turns is carried out by applying a force to the sportsman torso, said force being directed away from the center of a turn to be simulated,
- the value of the applied force depends directly on the value of the measured canting angle of the ski or snowboard imitator (2, 3, 28),
- the law of varying the applied force is selected in conformity with the law of varying the centrifugal force acting on the sportsman, said centrifugal force depending on canting angle of the ski or snowboard, during actual skiing.

3. A method as defined in Claim 2, **characterized in that** when the sportsman moves during training, a force applied to the sportsman torso is directed horizontally.

4. A method as defined in Claim 1 or 2, **characterized in that** information on a canting value of said ski or snowboard imitator and/or on a training process is displayed in a video graphic presentation and/or in an audio format.

5. An apparatus for training alpine skiers and snowboarders comprising
- a base, ski or snowboard imitator (2, 3, 28) provided with a sportsman footwear binding (4, 5) and located on the base to move perpendicular with respect to the longitudinal axis of the ski or snowboard imitator (2, 3, 28) and to be canted by the sportsman,
- a power drive (14) mechanically connected to the ski or snowboard imitator (2, 3, 28),
- means for detecting a canting angle (11, 12) of the ski or snowboard imitator (2, 3, 28), said means having an electric output,
- a control unit (13) connected with its input to the output of said means (11, 12) and an output connected to said power drive (14),
- said means (11, 12) for detecting a canting angle of the ski or snowboard imitator is made to measure a value of the ski or snowboard imitator canting angle, and
**characterized in that**
- a transfer characteristic of the control unit (13) is selected based on the condition to ensure a direct relationship between the measured value of a canting angle of the ski or snowboard imitator (2, 3, 28) and a value of the force exerted by the power drive (14),
- a transfer characteristic of the control unit (13) is selected in conformity with the law of varying the centrifugal force acting on the sportsman, said centrifugal force depending on canting angle of the ski or snowboard, during actual skiing.

6. An apparatus as defined in Claim 5, **characterized in that** it further comprises a belt to be put on by the sportsman, two upright guides mounted on the base to the left and the right of the ski or snowboard imitator and two movable couplings mounted on the guides to freely move in an upright direction and connected to the belt by means of cables.

7. An apparatus as defined in Claim 5, **characterized in that** said means for detecting a canting angle of the ski or snowboard imitator is connected to a computer provided with a means for displaying a video graphic information, for example, a video monitor, and/or a means for an audio data reproduction.

## Patentansprüche

1. Verfahren zum Trainieren von Alpinskifahrern und Snowboardern mit einem Ski- oder Snowboard-Imitator (2, 3, 28), in dem
- eine Simulation des Ausführens von Wendungen durch Anwenden einer Kraft auf den Ski- oder Snowboard-Imitator (2, 3, 28) ausgeführt wird, wenn der Ski- oder Snowboard-Imitator (2, 3, 28) zu einer oder einer anderen Seite gekippt wird,
- die Kraft rechtwinklig in Bezug auf die longitudinale Achse davon in Richtung des Zentrums einer Wendung, die simuliert werden soll, gerichtet wird,
- der Wert des Kippwinkels des Ski- oder Snowboard-Imitators (2, 3, 28) gemessen wird,
**dadurch gekennzeichnet, dass**
- der Wert der angewandten Kraft direkt vom Wert des gemessenen Kippwinkels des Ski- oder Snowboard-Imitators (2, 3, 28) abhängt,
- das Gesetz vom Ändern der angewandten Kraft in Übereinstimmung mit dem Gesetz vom Ändern der Zentrifugalkraft, die auf einen Sportler wirkt, gewählt wird, wobei die Zentrifugalkraft von einem Kippwinkel des Skis oder Snowboards während des eigentlichen Skifahrens abhängt.

2. Verfahren zum Trainieren von Alpinskifahrern und Snowboardern mit einem Ski- oder Snowboard-Imitator (2, 3, 28), in dem,
- wenn der Ski- oder Snowboard-Imitator (2, 3, 28) zu einer oder einer anderen Seite gekippt wird, eine Simulation des Ausführens von Wendungen angesichts geeigneter Neigungen eines auf dem Ski- oder Snowboard-Imitator stehenden Sportlers nach innen zu einer Wendung, die simuliert werden soll, ausgeführt wird,
- ein Kippwinkel des Ski- oder Snowboard-Imitators (2, 3, 28) gemessen wird,
**dadurch gekennzeichnet, dass**
- die Simulation des Ausführens von Wendungen durch Anwenden einer Kraft auf den Torso eines Sportlers ausgeführt wird, wobei die Kraft vom Zentrum einer Wendung, die simuliert werden soll, weg gerichtet ist,
- der Wert der angewandten Kraft direkt vom Wert des gemessenen Kippwinkels des Ski- oder Snowboard-Imitators (2, 3, 28) abhängt,
- das Gesetz vom Ändern der angewandten Kraft in Übereinstimmung mit dem Gesetz vom Ändern der Zentrifugalkraft, die auf einen Sportler wirkt, gewählt wird, wobei die Zentrifugalkraft von einem Kippwinkel des Skis oder Snowboards während des eigentlichen Skifahrens abhängt.

3. Verfahren wie in Anspruch 2 definiert,
**dadurch gekennzeichnet, dass**
wenn der Sportler sich während des Trainings bewegt, eine auf den Torso des Sportlers angewandte Kraft horizontal gelenkt wird.

4. Verfahren wie in Anspruch 1 oder 2 definiert,
**dadurch gekennzeichnet, dass**
eine Information zum Kippwinkel des Ski- oder Snowboard-Imitators und/oder zu einem Trainingsprozess in einer Videografikdarstellung und/oder in einem Audioformat angezeigt wird.

5. Vorrichtung zum Trainieren von Alpinskifahrern und Snowboardern aufweisend
- eine Basis, ein Ski- oder Snowboard-Imitator (2, 3, 28), der mit einer Sportschuhbindung (4, 5) versehen und auf der Basis angeordnet ist, um sich rechtwinklig in Bezug auf die longitudinale Achse des Ski- oder Snowboard-Imitators (2, 3, 28) zu bewegen und vom Sportler gekippt zu werden,
- einen Motorantrieb (14), der mechanisch mit dem Ski- oder Snowboard-Imitator (2, 3, 28) verbunden ist,
- Mittel zum Detektieren eines Kippwinkels (11, 12) des Ski- oder Snowbnoard-Imitators (2, 3, 28), wobei die Mittel einen elektrischen Ausgang haben,
- eine Regeleinheit (13), die mit ihrem Eingang mit dem Ausgang der Mittel (11, 12) verbunden ist und ein Ausgang, der mit dem Motorantrieb (14) verbunden ist, wobei
- die Mittel (11, 12) zum Detektieren eines Kippwinkels des Ski- oder Snowboard-Imitators ausgebildet sind, um einen Wert des Kippwinkels des Ski- oder Snowboard-Imitators zu messen,
**dadurch gekennzeichnet, dass**
- eine Übertragungscharakteristik der Regeleinheit (13) basierend auf der Bedingung zum Sicherstellen einer direkten Beziehung zwischen dem gemessenen Wert eines Kippwinkels des Ski- oder Snowboard-Imitators (2, 3, 28) und einem Wert der Kraft, die durch den Motorantrieb ausgeübt wird, ausgewählt ist,
- eine Übertragungscharakteristik der Regeleinheit (13) in Übereinstimmung mit dem Gesetz des Ändems der Zentrifugalkraft, die auf einen Sportler wirkt, ausgewählt ist, wobei die Zentrifugalkraft vom Kippwinkel des Skis oder Snowboards während dem eigentlichen Skifahren abhängig ist.

6. Vorrichtung wie in Anspruch 5 definiert,
**dadurch gekennzeichnet, dass**
sie ferner einen Gurt zum Umhängen durch den Sportler, zwei aufrechte auf der Basis montierte Führungen links und rechts vom Ski- oder Snowboard-Imitator und zwei bewegliche Kupplungen aufweist, die auf den Führungen montiert sind, um sich in einer aufrechten Richtung zu bewegen, und mit dem Gurt mittels Kabeln verbunden sind.

7. Vorrichtung wie in Anspruch 5 definiert,
**dadurch gekennzeichnet, dass**
die Mittel zum Detektieren eines Kippwinkels des Ski- oder Snowboard-Imitators mit einem Computer verbunden sind, der mit Mitteln zum Darstellen einer Videografikinformation, zum Beispiel einem Videomonitor, und/oder Mitteln für eine Audiodatenwidergabe ausgerüstet ist.

## Revendications

1. Procédé d'entraînement de skieurs alpins et snow-boarders au moyen d'une imitation de ski ou de snow-board (2, 3, 28), dans lequel
- lors du dévers de l'imitation de ski ou de snow-board (2, 3, 28) vers un côté ou l'autre, une simulation d'exécution de virages est réalisée en appliquant une force sur l'imitation de ski ou de snow-board (2, 3, 28),
- ladite force est dirigée perpendiculairement par rapport à l'axe longitudinal de celle-ci vers le centre d'un virage à simuler,
- la valeur d'un angle de dévers de l'imitation de ski ou de snow-board (2, 3, 28) est mesurée,
**caractérisé en ce que**
- la valeur de la force appliquée dépend directement de la valeur de l'angle de dévers mesuré de l'imitation de ski ou de snow-board (2, 3, 28),
- la règle de variation de la force appliquée est sélectionnée conformément à la règle de variation de la force centrifuge agissant sur un sportif, ladite force centrifuge dépendant d'un angle de dévers du ski ou du snow-board pendant qu'il skie réellement.

2. Procédé d'entraînement de skieurs alpins et snow-boarders au moyen d'une imitation de ski ou de snow-board (2, 3, 28), dans lequel
- lors du dévers du simili ski ou snow-board (2, 3, 28) vers un côté ou l'autre, la simulation d'exécution de virages est réalisée, étant données des inclinaisons appropriées d'un sportif debout sur ladite imitation de ski ou de snow-board, en direction de l'intérieur d'un virage à simuler,
- un angle de dévers de l'imitation de ski ou de snow-board (2, 3, 28) est mesuré,
**caractérisé en ce que**
- la simulation d'exécution de virages est réalisée en appliquant une force au torse du sportif, ladite force étant dirigée depuis le centre d'un virage à simuler,
- la valeur de la force appliquée dépend directement de la valeur de l'angle de dévers mesuré de l'imitation de ski ou de snow-board (2, 3, 28),
- la règle de variation de la force appliquée est sélectionnée conformément à la règle de variation de la force centrifuge agissant sur le sportif, ladite force centrifuge dépendant de l'angle de dévers du ski ou du snow-board pendant qu'il skie réellement.

3. Procédé selon la revendication 2, **caractérisé en ce que**, lorsque le sportif bouge pendant l'entraînement, une force appliquée au torse du sportif est dirigée horizontalement.

4. Procédé selon la revendication 1 ou 2, **caractérisé en ce que** les informations sur une valeur de dévers de ladite imitation de ski ou de snow-board et/ou sur un processus d'entraînement sont affichées dans une représentation graphique vidéo et/ou en format audio.

5. Appareil destiné à l'entraînement des skieurs alpins et snow-boarders, comprenant
- une base, une imitation de ski ou de snow-board (2, 3, 28) équipée d'un système de fixation des chaussures d'un sportif (4, 5) et placée sur la base de manière à bouger perpendiculairement par rapport à l'axe longitudinal de l'imitation de ski ou de snow-board (2, 3, 28) et qui doit être amenée en dévers par le sportif,
- une commande électrique (14) raccordée mécaniquement à l'imitation de ski ou de snow-board (2, 3, 28),
- un moyen de détection d'un angle de dévers (11, 12) de l'imitation de ski ou de snow-board (2, 3, 28), ledit moyen ayant une sortie électrique,
- une unité de commande (13) raccordée par son entrée à la sortie dudit moyen (11, 12) et une sortie raccordée à ladite commande électrique (14),
- ledit moyen (11, 12) de détection d'un angle de dévers de l'imitation de ski ou de snow-board étant conçu pour mesurer une valeur de l'angle de dévers de l'imitation de ski ou de snow-board, et
**caractérisé en ce que**
- une caractéristique de transfert de l'unité de commande (13) est sélectionnée en se basant sur la condition permettant d'assurer une relation directe entre la valeur mesurée d'un angle de dévers de l'imitation de ski ou de snow-board (2, 3, 28) et une valeur de force exercée par la commande électrique (14),
- une caractéristique de transfert de l'unité de commande (13) est sélectionnée conformément à la règle de variation de la force centrifuge agissant sur le sportif, ladite force centrifuge dépendant de l'angle de dévers du ski ou du snow-board pendant qu'il skie réellement.

6. Appareil selon la revendication 5, **caractérisé en ce qu'**il comprend en outre une ceinture à porter par le sportif, deux guides verticaux montés sur la base à gauche et à droite de l'imitation de ski ou de snow-board et deux liens mobiles montés sur les guides de manière à bouger librement dans un sens vertical et raccordés à la ceinture au moyen de câbles.

7. Appareil selon la revendication 5, **caractérisé en ce que** ledit moyen de détection d'un angle de dévers de l'imitation de ski ou de snow-board est raccordé à un ordinateur équipé d'un moyen d'affichage d'informations graphiques vidéo, par exemple un moniteur vidéo et/ou un moyen de reproduction de données audio.
